# EUROPEAN PATENT APPLICATION

(11) **EP 4 518 276 A1**
(43) Date of publication of application: **05.03.2025**
(21) Application number: 24197088.8
(22) Date of filing: 28.08.2024
(51) Int. Cl.: H04L 43/50

(54) **PACKET INTEGRITY VERIFICATION FOR A PACKET PROCESSING SYSTEM OF A NETWORK DEVICE**

(30) Priority: 31.08.2023 US 202318459309
(71) Applicant: Arista Networks, Inc., Santa Clara, CA 95054 (US)
(72) Inventor: ANDERSON, Daniel Mark, Londonberry (US); BEAUDETTE, Steven Michael, Nashua (US); PARISEAU, Luc Andre, Santa Clara (US); SMITH, Scott, Arlington (US); CHANDRAN, Kartik, Los Altos (US)
(74) Representative: Barton, Russell Glen

(57) **Abstract**

Some disclosed examples involve writing a test pattern of bits to one or more fields of at least one test packet and injecting the at least one test packet into a packet processing system of a network device. Some disclosed examples involve causing the at least one test packet to loop multiple times through ingress and egress portions of the packet processing system, trapping the at least one test packet and determining whether the test pattern of the at least one test packet has been altered.

## Description

This application claims priority to U.S. patent application No. 18/459,309, filed August 31, 2023, which is hereby incorporated by reference herein in its entirety.

### TECHNICAL FIELD

This disclosure relates generally to network devices and more specifically to detecting corrupted packets in network devices.

### BACKGROUND

Although some previously-deployed methods-such as cyclic redundancy check (CRC) operations-exist to verify that unintentionally corrupted packets do not get processed or forwarded on, at least a part of the packet processing system of a network device cannot be protected by previously-deployed methods. For example, if corruption occurs in a section of the packet processing system in which packet editing is occurring, CRC checks may fail to detect the corruption. In at least one known instance, a stuck bit in the packet processing system caused packet corruption that was not detectable according to previously-deployed methods. Improved methods that are capable of detecting unintentionally corrupted packets in a network device's packet processing system would be desirable.

### BRIEF DESCRIPTION OF THE DRAWINGS

Details of one or more implementations of the subject matter described in this specification are set forth in the accompanying drawings and the description below. Other features, aspects, and advantages will become apparent from the description, the drawings, and the claims. Note that the relative dimensions of the following figures may not be drawn to scale. Like reference numbers and designations in the various drawings indicate like elements.
Figures 1, 2 and 3A are block diagrams that represent modules of an apparatus according to one example.
Figure 3B is a block diagram that represents modules of an apparatus according to another example.
Figure 4A shows examples of test packet fields.
Figures 4B, 4C and 4D show examples of test patterns of bits.
Figure 5 is a flow diagram that presents examples of operations according to some disclosed methods.
Figure 6 is a block diagram that shows example components of an apparatus according to some disclosed implementations.
Figure 7 is a schematic representation of a network device (e.g., switch, router, etc.) that can be adapted in accordance with the present disclosure.

### DETAILED DESCRIPTION

The following description is directed to certain implementations for the purposes of describing the innovative aspects of this disclosure. However, a person of ordinary skill in the art (POSITA) will readily recognize that the teachings herein may be applied in a multitude of different ways. Thus, the disclosed teachings are not intended to be limited to the implementations depicted solely in the Figures, but instead have wide applicability as will be readily apparent to a POSITA. For example, while some disclosed examples disclosed herein are directed to virtual local area network (VLAN) implementations, a POSITA will realize that the disclosed VLAN-based methods are merely examples and that other techniques may be used to implement the disclosed methods of packet integrity verification.

Some disclosed methods provide packet integrity verification for a packet processing system of a network device. As used herein, the term "network device" may refer, for example, to a router or a switch. A network device's packet processing system also may be referred to herein as a "packet processing pipeline." Accordingly, the disclosed verification methods may be implemented by what is referred to herein as an inline pipeline integrity checker (IPIC). The IPIC may be implemented via a module, which also may be referred to as an IPIC agent, executed by a control system (for example, by a central processing unit (CPU)) of the network device. The IPIC agent may be configured to verify that unintentional bit corruption is not occurring in a network device's packet processing system.

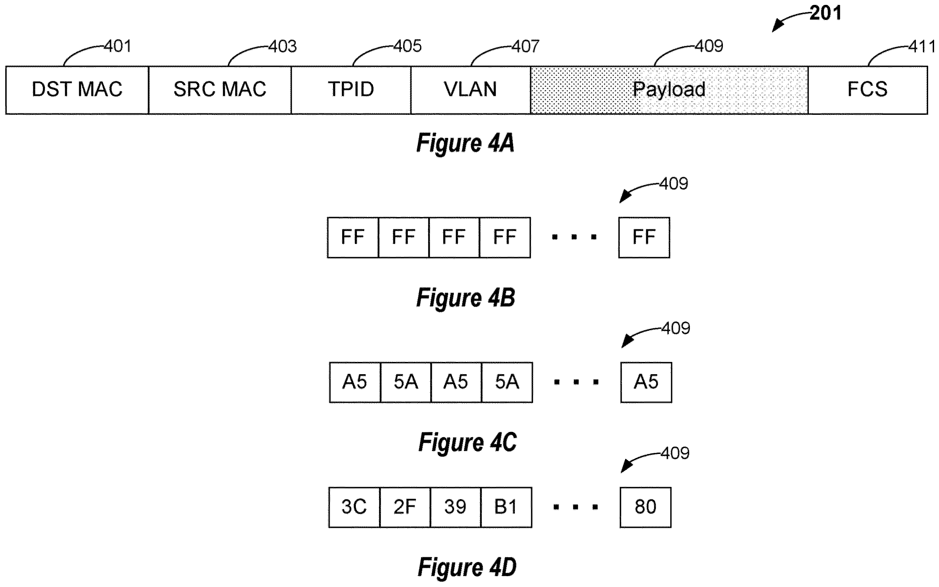

In some examples, the IPIC agent is configured to inject one or more packets with known bit patterns into the packet processing system. An injected bit pattern may also be referred to herein as a "test pattern" or a "test pattern of bits." Various examples of test patterns are disclosed herein and some examples are shown in Figures 4B-4D. A packet that includes a test pattern of bits may be referred to herein as a "test packet." In some examples, the test pattern of bits may be specified by a user, for example via a command line interface (CLI), a graphical user interface (GLTI) or via a file Uniform Resource Locator (URL). In some such examples, the entire contents of the test packet may be user-specified.

According to some examples, the IPIC agent is configured to cause the test packet(s) to circulate or "loop" through the ingress and egress portions of a network device's packet processing system multiple times. In some examples, the IPIC agent may be configured to cause the test packet(s) to loop through the ingress and egress portions for a specified time interval, such as a specified number of seconds, a specified number of minutes, a specified number of hours, etc. In some alternative examples, the IPIC agent may be configured to cause the test packet(s) to loop through the ingress and egress portions a specified number of times, such as hundreds of times, thousands of times, tens of thousands of times, etc.

In some examples, after causing the test packet(s) to loop through the ingress and egress portions multiple times, the IPIC agent is configured to cause the injected test packet(s) to be trapped and evaluated. According to some examples, the IPIC agent is configured to determine whether the test pattern of a trapped test packet has been altered by comparing the test pattern of the trapped test packet with the original test pattern that the IPIC agent injected, or caused to be injected, into the test packet. If the test pattern of a test packet has not been altered, the IPIC agent may determine that the test packet has not been corrupted. If the test pattern of a test packet has been altered, the IPIC agent may determine that the test packet has been corrupted. In some examples, the IPIC agent may be configured to send a notification that the test packet has been corrupted, for example to a device used by a network administrator.

Some disclosed examples involve controlling the number of test packets that are simultaneously looping through the ingress and egress portions of the packet processing system. In some such examples, the number of test packets that are simultaneously looping through the ingress and egress portions may be controlled in order to avoid adversely affecting the traffic flow rate of packets that are being received and forwarded by the network device. According to some examples, the number of test packets that are simultaneously looping through the ingress and egress portions may be controlled according to user input. In some such examples, the user input may include, or may correspond to, input regarding a target bandwidth or a target packet traffic flow rate for the network device. Some examples may involve monitoring-for example, by the network device implementing the IPIC agent-one or more criteria corresponding to a packet traffic flow rate of the network device. Controlling the number of test packets simultaneously looping through the ingress and egress portions of the packet processing system may be responsive to the one or more criteria. The one or more criteria may, for example, include one or more packet latency criteria. The packet latency criteria may, for example, include packet queue backlog metrics such as the average packet queue backlog, one or more average packet queue backlog thresholds, one or more individual packet queue backlogs, one or more individual packet queue backlog thresholds, etc.

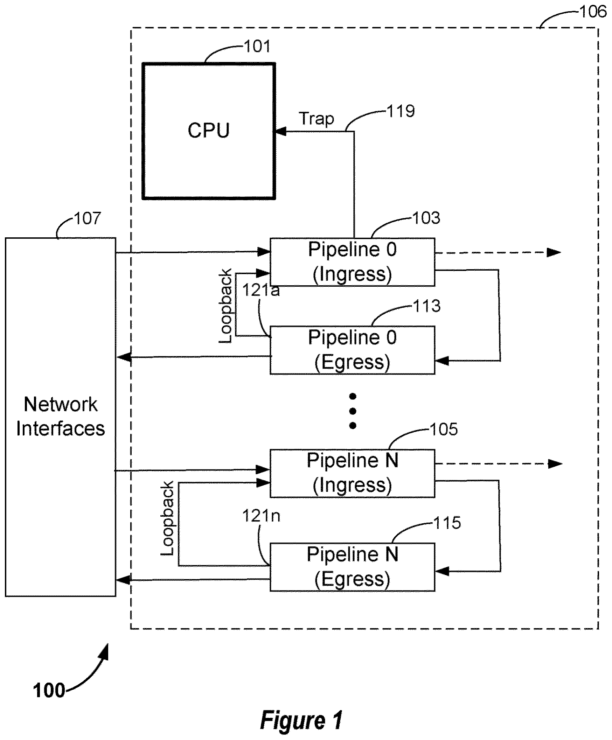

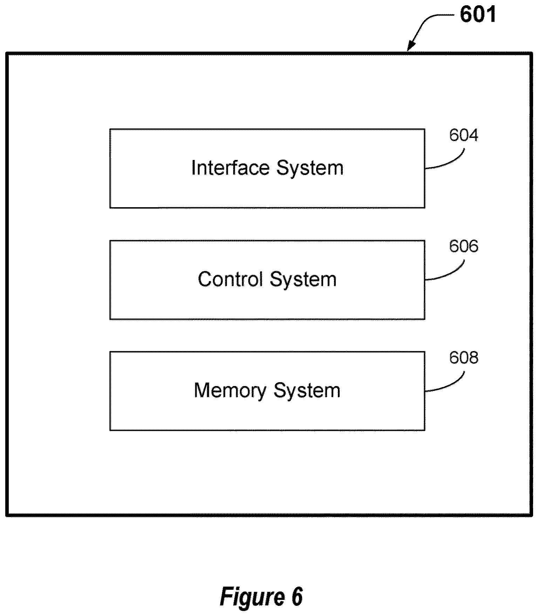

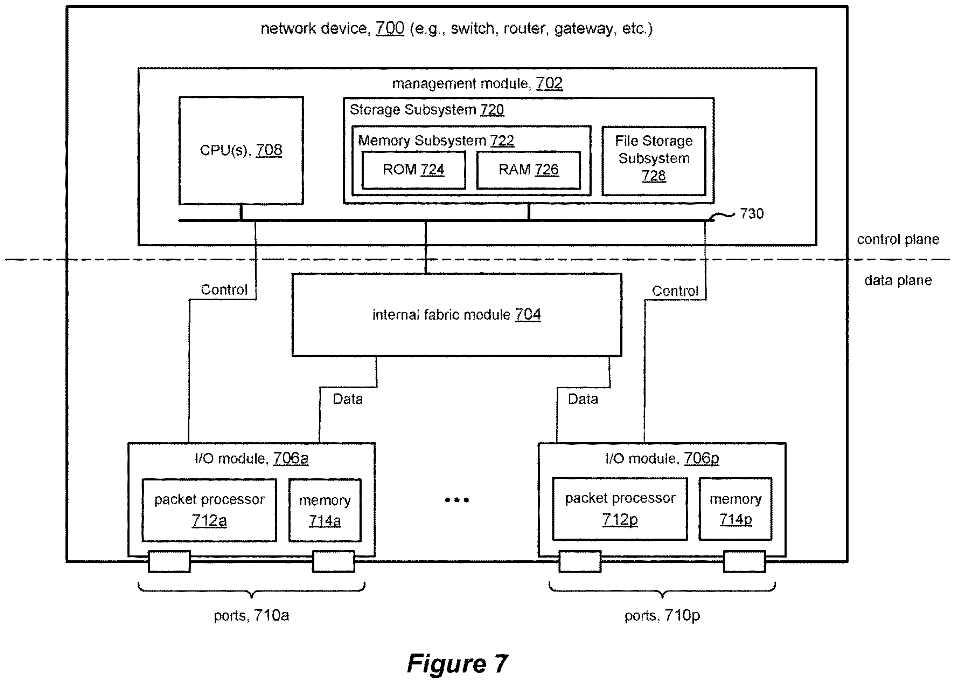

Figures 1, 2 and 3A are block diagrams that represent modules of an apparatus according to one example. Figures 1-3A show examples of the apparatus 100 at three different times. According to this example, the apparatus 100 is a network device. The network device may, for example, be a switch or a router. As with other disclosed examples, alternative implementations of the apparatus 100 may include different numbers of elements, different types of elements, different arrangements of elements, or combinations thereof. For example, in some alternative implementations-as suggested by the dashed arrows emerging from blocks 103 and 105-the apparatus 100 may include fabric interfaces that provide connectivity between the packet processing pipelines and other components of the apparatus 100. In some examples, the apparatus 100 may be an instance of the apparatus 601 that is shown in Figure 6 and the control system 106 may be an instance of the control system 606 shown in Figure 6. The control system 106 may include one or more general purpose single- or multi-chip processors, digital signal processors (DSPs), application specific integrated circuits (ASICs), field programmable gate arrays (FPGAs) or other programmable logic devices, discrete gates or transistor logic, discrete hardware components, or combinations thereof. In some such examples, the network interfaces 107 shown in Figures 1-3A may be components of the interface system 604 of Figure 6. In some examples, the apparatus 100 also may include components of the network device 700 shown in Figure 7.

In the examples shown in Figures 1-3A, the control system 106 includes the central processing unit (CPU) 101 and at least two pipelines, pipeline 0 and pipeline N. In some examples, the control system 106 may include more than two pipelines, as suggested by the three dots between pipeline 0 and pipeline N. According to these examples, the control system 106 implements various modules, including pipeline 0 ingress module 103, pipeline N ingress module 105, pipeline 0 egress module 113 and pipeline N egress module 115. These modules are example components of what may be referred to herein as a "packet processing system." In some examples, the control system 106 may implement one or more of these modules via instructions-such as software-stored in a computer-readable and non-transitory memory. Accordingly, in some examples, the control system 106 may include-or may be configured for communication with-one or more memory devices, such as one or more random access memory (RAM) devices, one or more read-only memory (ROM) devices, etc., on which such instructions may be stored. According to some examples, each pipeline may be implemented in a separate core of a multi-core processor.

According to some examples, all of the blocks of the control system 106 shown in Figure 1, with the exception of the CPU 101, may be implemented by a single integrated circuit or "chip." In some such examples, the network interfaces 107 may be, or may include, ports-such as Ethernet ports-that provide communication between the chip and other devices in a network.

In this example, the control system 106 is configured to implement the disclosed IPIC agent. More specifically, according to this example the CPU 101 is configured to implement the IPIC agent. In other examples, another component of the control system 106 may be configured to implement the IPIC agent.

According to these examples, the internal loopback port 121a is configured to send packets exiting the pipeline 0 egress module 113 to the pipeline 0 ingress module 103. Similarly, the internal loopback port 121n is configured to send packets exiting the pipeline N egress module 115 to the pipeline N ingress module 105. Various disclosed implementations use such internal loopback ports as part of a process of causing a test packet to loop through ingress and egress portions of a packet processing system. In some such examples, the process of causing a test packet to loop through ingress and egress portions of a packet processing system may involve causing the test packet to be sent to an internal loopback port, such as the internal loopback port 121a. According to some examples, causing a test packet to be sent to an internal loopback port may involve adding metadata to the test packet that causes the test packet to egress the internal loopback port. Such metadata may be information that is carried along with the test packet, but may not be directly contained in the test packet.

At the time corresponding to Figure 1, the IPIC agent is in the process of setting up the packet processing system to cause a test packet to loop through the ingress and egress portions of the packet processing system. In this specific example, the IPIC agent is in the process of setting up the packet processing system to cause a test packet to loop through the ingress and egress portions of pipeline 0, the pipeline 0 ingress module 103 and the pipeline 0 egress module 113. In some alternative examples, the IPIC agent may cause a test packet to loop through the ingress and egress portions of pipeline N, the pipeline N ingress module 105 and the pipeline N egress module 115.

The IPIC agent also may be configured to cause an ingress packet processing module to re-write a source port field of a test packet to indicate a component of the control system-in this example, the CPU 101-that is implementing the IPIC agent. According to this example, the IPIC agent is configured to cause the pipeline 0 ingress module 103 to re-write a source port field of a test packet to indicate the CPU 101, in order to allow the test packet to loop through the pipeline 0 ingress module 103 and the pipeline 0 egress module 113. In this example, the IPIC agent is configured to enable a trap that will subsequently allow the IPIC agent to trap and inspect the test packet. The trap 119 shown in Figure 1 provides one example. The IPIC agent may cause the trap 119 to be enabled in order to allow the IPIC agent to inspect a test packet, after the test packet has looped multiple times through the ingress and egress portions of a packet processing system. In some such examples, the trap may have an enable/disable setting as well as a trap destination field that can be programmed to control if and how the trap will affect the test packet.

In some VLAN-based examples, the IPIC agent may allocate a previously-unused virtual local area network (VLAN) identification number (ID) and may associate the previously-unused VLAN ID with the internal loopback port 121a of the pipeline 0 egress module 113. According to some examples, the IPIC agent may configure the internal loopback port 121a as a member of the VLAN. In some examples, the IPIC agent may configure the internal loopback port 121a as a VLAN trunk port.

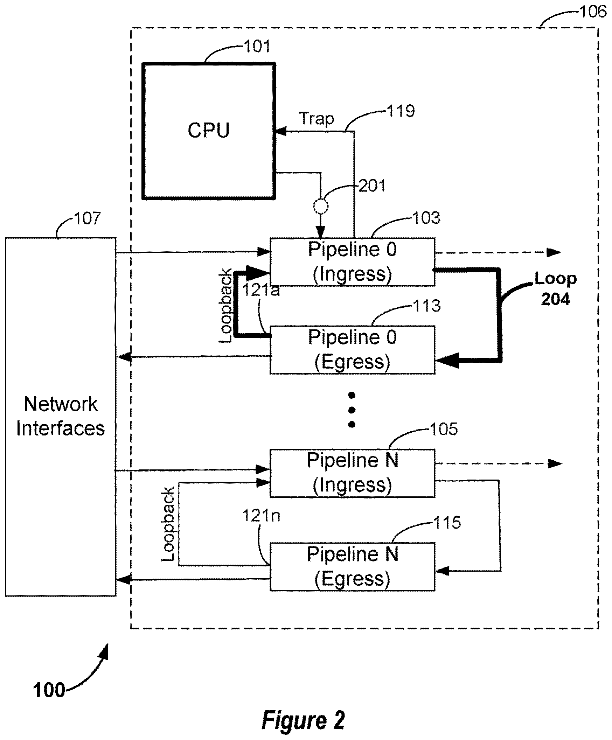

Figure 2 shows the apparatus of Figure 1 at a subsequent time. In this example, the IPIC agent has written a test pattern of bits to one or more fields of a test packet 201 and has provided the test packet 201 to the pipeline 0 ingress module 103. Some examples of test patterns and packet fields are described below with reference to Figures 4A-4D. According to this example, the IPIC agent is configured to include a header in the test packet 201 indicating the internal loopback port 121a as a destination address. Accordingly, the packet processing system will forward the test packet 201 to the internal loopback port 121a.

In some VLAN-based examples in which a previously-unused VLAN ID has been associated with the internal loopback port 121a, the IPIC agent, the pipeline 0 ingress module 103, or both, may indicate the VLAN ID in a header of the test packet 201. In some "VLAN flooding" examples, the IPIC agent may cause a trap action to be configured to re-write the source port for packets on that VLAN. The test packet 201 may be injected with metadata that causes it to egress the internal loopback port 121a. In some examples, after the test packet 201 traverses the internal loopback port 121a, the pipeline 0 ingress module 103 will add the VLAN ID to a header of the test packet 201. In other examples, test packet metadata will carry the VLAN ID as an attribute based on the port upon which the test packet was received. In either case, this causes a trap action to occur, which changes the source port. Normal VLAN flooding rules cause the test packet 201 to be sent out the only port in the VLAN, which is the internal loopback port 121a in this example. The source port is re-written because the packet processing system would not normally send a packet out on the same port that the packet came in on.

In some "VLAN trapping" examples, the internal loopback port 121a is added to the VLAN, and a trap action is configured to trap test packets on this VLAN to the internal loopback port 121a. In some such examples, the test packet 201 is injected with metadata that causes the test packet 201 to egress the internal loopback port 121a. When ingress processing occurs for the test packet 201-in this example by the pipeline 0 ingress module 103-the VLAN ID is added as metadata. This causes a trap action to occur, which changes the source port of the test packet 201 and causes the test packet 201 to be trapped: in this example, the trap causes the test packet 201 to be sent out the internal loopback port 121a.

In some alternative examples, no VLAN IDs are used. According to some such examples, a trap action may be configured to trigger on all packets coming in from a specific loopback port. The action may be to trap test packets back out to the same loopback port. A test packet may be injected with metadata that causes the test packet 201 to egress the loopback port. In some examples, the metadata may identify the ingress port where the test packet 201 was received. When ingress processing occurs for the test packet, in some examples the source port of the test packet 201 may be rewritten and the test packet may be trapped (sent out) the loopback port.

In some examples, the IPIC agent may be configured to cause multiple test packets to loop through the ingress and egress portions of a packet processing system, for example in the loop 204 that is shown in Figure 2. In some examples, the IPIC agent may be configured to control the number of test packets that are simultaneously looping through the ingress and egress portions of the packet processing system. In some such examples, the IPIC agent may be configured to control the number of test packets simultaneously looping through the ingress and egress portions of the packet processing system responsive to user input, such as user input regarding a target bandwidth or a target packet traffic flow rate for a network device implementing the method (such as the apparatus 100).

In some "manual throttling" examples, when configuring a test, a user may specify a target bandwidth for the IPIC agent to attempt to use when test packets are looping through the packet processing system. In other words, some such examples allow a user to specify a bandwidth that could be consumed by the testing process and the looping of test packets through the packet processing system. In some such examples, the IPIC agent may configure the flow control for the loopback port, the number of test packets simultaneously looping, or both, to limit traffic to the user-selected bandwidth. Such examples may allow a user to specify a high bandwidth for verifying hardware when the network device is not in use-in other words, when the network device is not being used to receive and transmit packets on a network-or a low bandwidth for background testing when the device is in use. In some examples, it may be the user's responsibility to understand what values represent high or low bandwidth in each context. In other examples, a "high bandwidth" range (such as 50% to 90%) and a "low bandwidth" range (such as 1% to 10%) may be indicated-for example on a user interface such as a command line interface (CLI) or a graphical user interface (GUI)-and the user may select a value within the appropriate range. According to some examples, the IPIC agent will compute the number of packets needed to attain the requested bandwidth, based on the test packet size, and generate and inject that many packets. In some examples, the test packet size may be selectable by the user, for example via a CLI or a GUI.

Alternatively, or additionally, the IPIC agent may be configured to control the number of test packets simultaneously looping through the ingress and egress portions of the packet processing system responsive to one or more criteria corresponding to a packet traffic flow rate of the apparatus 100. Some such "dynamic throttling" examples may be enabled or disabled according to a user-configurable setting. For example, instead of the user specifying a particular desired bandwidth for a background test, the apparatus 101 may provide the user the options of enabling or disabling a configuration parameter. In one such example, the configuration parameter may be named NonInterferingMode.

The one or more criteria corresponding to packet traffic flow rate may, for example, be monitored by the control system 106. The one or more criteria may, for example, include one or more packet latency criteria. The packet latency criteria may, for example, include packet queue backlog metrics such as the average packet queue backlog, one or more average packet queue backlog thresholds, one or more individual packet queue backlogs, one or more individual packet queue backlog thresholds, etc.

In some examples, the control system 106 may be configured to monitor the size of one or more ingress queues on a core in which the IPIC agent is causing one or more test packets to loop. An ingress queue size metric represents the number of packets waiting to be processed by the ingress processing pipeline, also known as the packet backlog.

According to some examples, separate thresholds may be determined for both an average ingress queue backlog and one or more individual ingress queue backlogs. In some examples, the IPIC agent may be configured to reduce the number of test packets that are simultaneously looping through the ingress and egress portions of a packet processing system if the average ingress queue backlog, one or more individual ingress queue backlog, or both, are greater than or equal to a first threshold. The first threshold for the average ingress queue may or may not be equal to the first threshold for the individual ingress queue(s), depending on the particular implementation. In some examples, the IPIC agent may be configured to increase the number of test packets that are simultaneously looping through the ingress and egress portions of a packet processing system if the average ingress queue backlog, one or more individual ingress queue backlog, or both, are less than or equal to a second threshold. The second threshold for the average ingress queue may or may not be equal to the second threshold for the individual ingress queue(s), depending on the particular implementation. According to some examples, the first threshold(s) and the second threshold(s) may be selectable by a user.

For example, if the average ingress queue backlog is >50% of the ingress queue depth or any individual ingress queue is > 75% of the ingress queue depth, the IPIC agent may be configured to reduce the loopback port's bandwidth limit. Alternatively, or additionally, the IPIC agent may be configured to reduce the number of test packets that are simultaneously looping through the ingress and egress portions of that core's packet processing system. If the average queue backlog is < 25% of the queue depth, and all individual queues are < 35% of their depth, the IPIC agent may be configured to raise the loopback port's bandwidth limit, to reduce the number of test packets that are simultaneously looping through the ingress and egress portions of that core's packet processing system, or both.

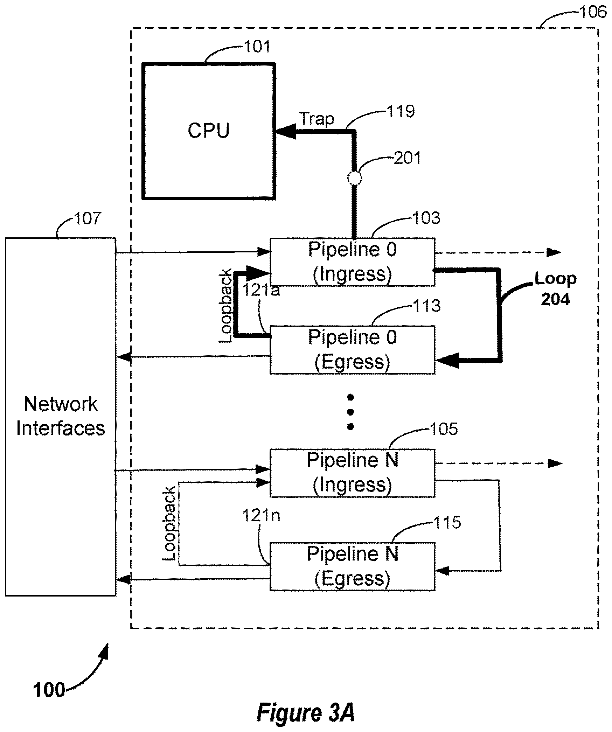

Figure 3A shows the apparatus of Figure 2 at a subsequent time. At the time indicated by Figure 3A, the test packet 201 is being trapped so that the CPU 101 can inspect the test packet 201. In this example, the pipeline 0 ingress module 103 is forwarding the test packet 201 to the CPU 101 via the trap 119. If the test pattern of the test packet 201 has not been altered, the IPIC agent may determine that the test packet 201 has not been corrupted. If the test pattern of the test packet 201 has been altered, the IPIC agent may determine that the test packet 201 has been corrupted. In some examples, the IPIC agent may be configured to send a notification that the test packet 201 has been corrupted, for example to a device used by a network administrator.

As noted elsewhere herein, in some examples the IPIC agent may be configured to cause the test packet(s) to loop through the ingress and egress portions for a specified time interval, such as a specified number of seconds, a specified number of minutes, a specified number of hours, etc., before trapping and inspecting the test packet. In some alternative examples, the IPIC agent may be configured to cause the test packet(s) to loop through the ingress and egress portions of a packet processing system a specified number of times, such as hundreds of times, thousands of times, tens of thousands of times, etc., before trapping and inspecting the test packet.

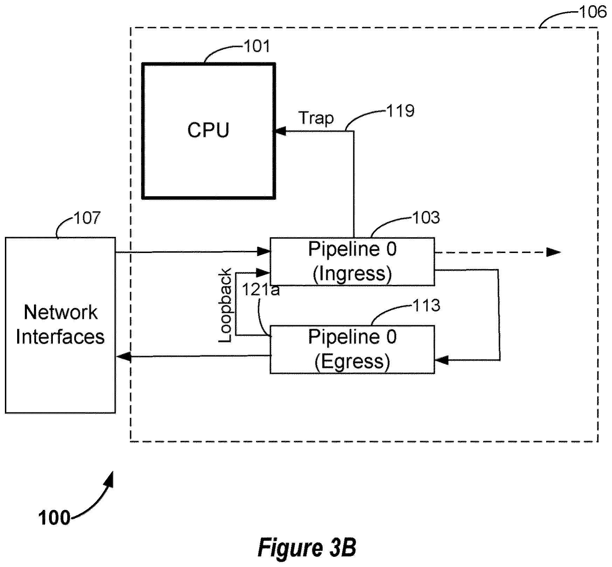

Figure 3B is a block diagram that represents modules of an apparatus according to another example. In the example shown in Figure 3B, the control system 106 includes the central processing unit (CPU) 101 and a single packet processing system or pipeline, pipeline 0. According to this example, the control system 106 implements pipeline 0 ingress module 103 and pipeline 0 egress module 113. In some examples, the control system 106 may be configured to provide the functionality that is described herein with reference to Figures 1-3A.

Figure 4A shows examples of test packet fields. In this example, the test packet 210 includes a destination media access control (DST MAC) field 401, a source media access control (SRC MAC) field 403, a tag protocol identifier (TPID) field 405, a VLAN field 407, a payload field 409 and a frame check sequence (FCS) field 411. In other implementations, the test packet 210 may include more fields, fewer fields, or different fields. According to this example, the payload field 409 includes a test pattern of bits that have been added to the test packet 210 by an IPIC agent. In some alternative examples, the IPIC agent may inject a test pattern of bits into one or more other fields of the test packet 201.

Figures 4B, 4C and 4D show examples of test patterns of bits. Figures 4B and 4C show examples of repeating bit values. In each example, four beginning values and one ending value are shown, with an ellipsis between the beginning and ending values that is intended to represent the intervening values. In the example shown in Figure 4B, all of the bit values are the same. In the example shown in Figure 4C, the bit values alternate between two values, which are "A5" and "5A" in this instance. In the example shown in Figure 4D, the bit values have been randomly generated. Other examples may involve yet other test patterns of bits.

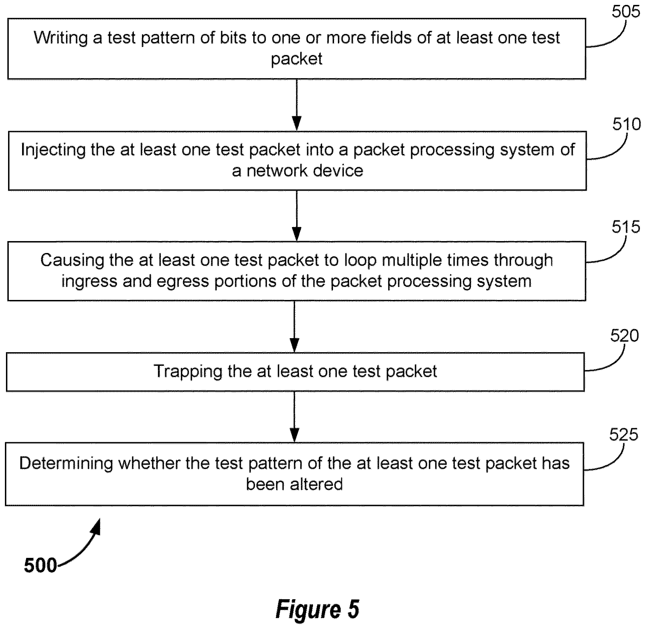

Figure 5 is a flow diagram that presents examples of operations according to some disclosed methods. The blocks of Figure 5 may, for example, be performed by the apparatus of Figures 1-3B, Figure 6 or Figure 7, or by a similar apparatus. For example, in some implementations the control system 106 of Figures 1-3B or the control system 606 of Figure 6 may be configured to perform, at least in part, the operations that are described herein with reference to Figure 5. The blocks of Figure 5 may, in some examples, be performed by an IPIC agent. As with other methods disclosed herein, the methods outlined in Figure 5 may include more or fewer blocks than indicated. Moreover, the blocks of methods disclosed herein are not necessarily performed in the order indicated. In some implementations, one or more blocks may be performed concurrently.

According to this example, block 505 involves writing a test pattern of bits to one or more fields of at least one test packet. In some examples, an IPIC agent may write the test pattern of bits to one or more fields of a test packet. According to some examples, the test pattern of bits may be similar to those of Figure 4B, 4C or 4D.

In this example, block 510 involves injecting the at least one test packet into a packet processing system of a network device. According to some examples, the IPIC agent may inject one or more instances of the test packet 201 into the packet processing system of Figure 2-for example, into the pipeline 0 ingress module 103-in block 510.

According to this example, block 515 involves causing the at least one test packet to loop multiple times through ingress and egress portions of the packet processing system. For example, the IPIC agent may cause one or more instances of the test packet 201 to traverse the pipeline 0 ingress module 103 and the pipeline 0 egress module 113 multiple times in block 515.

In this example, block 520 involves trapping the at least one test packet. According to some examples, the IPIC agent may cause the test packet 201 to be trapped-for example, may cause the pipeline 0 ingress module 103 to forward the test packet 201 to the CPU 101-in block 520.

According to this example, block 525 involves determining whether the test pattern of the at least one test packet has been altered. For example, an IPIC agent implemented by the CPU 101 shown in Figure 3A may compare the current test pattern of the test packet 201 with the test pattern that was previously injected into the test packet 201 in block 525. If the test pattern has not been altered, the IPIC agent may determine that the test packet 201 has not been corrupted. If the test pattern has been altered, the IPIC agent may determine that the test packet 201 has been corrupted. In some examples, the IPIC agent may be configured to send a notification that the test packet 201 has been corrupted, for example to a device used by a network administrator.

In some examples, causing the at least one test packet to loop multiple times may involve causing the packet processing system to send the at least one test packet to an internal loopback port. In some examples, the internal loopback port may be configured to send the at least one test packet to an ingress packet processing module. In some examples, causing the at least one test packet to loop multiple times may involve re-writing a source port field of the at least one test packet. According to some examples, method 500 may involve causing the ingress packet processing module to re-write a source port field of the at least one test packet to indicate a portion of a control system that is implementing the IPIC agent, such as a CPU of the network device.

According to some examples, causing the at least one test packet to be sent to the internal loopback port may involve adding metadata to the at least one test packet that causes the at least one test packet to egress the internal loopback port. In some examples, causing the at least one test packet to be sent to the internal loopback port may involve requesting a previously-unused VLAN ID and associating the previously-unused VLAN ID with the internal loopback port. According to some examples, method 500 may involve configuring the internal loopback port as a VLAN trunk port.

In some examples, method 500 may involve controlling a number of test packets simultaneously looping through the ingress and egress portions of the packet processing system. In some such examples, method 500 may involve receiving user input. According to some such examples, controlling the number of test packets simultaneously looping through the ingress and egress portions of the packet processing system may be responsive to the user input. In some examples, the user input may be, or may include, input regarding a target bandwidth or a target packet traffic flow rate for a network device implementing the method 500.

According to some examples, method 500 may involve monitoring one or more criteria corresponding to a packet traffic flow rate of a network device implementing the method 500. In some such examples, controlling the number of test packets simultaneously looping through the ingress and egress portions of the packet processing system may be responsive to the one or more criteria.

Figure 6 is a block diagram that shows example components of an apparatus according to some disclosed implementations. In this example, the apparatus 601 includes an interface system 604, a control system 606 and a memory system 608. As with other disclosed examples, alternative implementations of the apparatus 601 may include different numbers of elements, different types of elements, or combinations thereof. In some implementations, the apparatus 601 may be a network device, such as a router or a switch.

In some implementations, the interface system 604 may include a plurality of network interfaces configured for communication between the control system 606 and the control systems of other network devices. According to , the interface system 604 may be configured for receiving and transmitting packets. The interface system 604 may include internal communication pathways between components of the apparatus 601, including internal communication pathways between modules implemented by the control system 606. Internal fabric module 704, I/O modules 706a-706p and bus subsystem 730, which are described below with reference to Figure 7, provide examples of such internal communication pathways. Accordingly, the interface system 604 may include one or more interfaces between the control system 606 and the memory system 608, for example via electrically conducting material (e.g., via electrically conductive metal wires or traces).

The control system 606 may include one or more general purpose single- or multi-chip processors, digital signal processors (DSPs), application specific integrated circuits (ASICs), field programmable gate arrays (FPGAs) or other programmable logic devices, discrete gates or transistor logic, discrete hardware components, or combinations thereof. Although the control system 606 and the memory system 608 are shown as separate blocks in Figure 6, according to some examples the control system 606 also may include one or more memory devices, such as one or more random access memory (RAM) devices, one or more read-only memory (ROM) devices, etc. Accordingly, both the control system 606 and also the memory system 608 may include such components.

According to some examples, the control system 606-for example, via an IPIC agent implemented by the control system 606-may be configured to write a test pattern of bits to one or more fields of at least one test packet. In some examples, the control system 606 may be configured to inject the at least one test packet into the packet processing system.

In some examples, the control system 606 may be configured to cause at least one test packet to loop multiple times through ingress and egress portions of the packet processing system. According to some examples, the control system 606 may be configured to trap a test packet. In some examples, the control system 606 may be configured to determine whether the test pattern of the test packet has been altered.

According to some examples, causing a test packet to loop multiple times may involve causing the packet processing system to send the test packet to an internal loopback port. According to some examples, causing a test packet to be sent to the internal loopback port may involve adding metadata to the test packet that causes the test packet to egress the internal loopback port. In some examples, causing a test packet to be sent to the internal loopback port may involve requesting a previously-unused VLAN ID and associating the previously-unused VLAN ID with the internal loopback port.

In some examples, the control system 606 may be configured to re-write a source port field of a test packet. According to some such examples, the control system 606 may be configured to re-write the source port field to indicate a module of the control system that is implementing an IPIC agent.

According to some examples, the memory system 608 may include one or more memory devices, such as one or more RAM devices, ROM devices, etc. In some implementations, the memory system 608 may include one or more computer-readable media. Computer-readable media include both computer storage media and communication media including any medium that may be enabled to transfer a computer program from one place to another. Storage media may be any available media that may be accessed by a computer. In some examples, the memory system 608 may include one or more computer readable non-transitory media. By way of example, and not limitation, computer readable non-transitory media may include RAM, ROM, electrically erasable programmable read-only memory (EEPROM), compact disc ROM (CD-ROM) or other optical disk storage, magnetic disk storage or other magnetic storage devices, or any other medium that may be used to store desired program code in the form of instructions or data structures and that may be accessed by a computer.

Figure 7 is a schematic representation of a network device (e.g., switch, router, etc.) that can be adapted in accordance with the present disclosure. Figure 7 is an example of the apparatus 601 of Figure 6. In some embodiments, network device 700 can include a management module 702, an internal fabric module 704, and a number of I/O modules 706a - 706p. Management module 702 can constitute the control plane (also referred to as control layer or simply the CPU) of network device 700 and can include one or more management CPUs 708 for managing and controlling operation of network device 700 in accordance with the present disclosure. Each management CPU 708 can be a general-purpose processor, such as an Intel^{®}/AMD^{®} x86, ARM^{®} microprocessor and the like, that operates under the control of software stored in a memory, such as ROM (read-only memory) 724 or RAM (random-access memory) 726. The control plane provides services that include traffic management functions such as routing, security, load balancing, analysis, and the like. In some examples, one or more management CPUs 708 may be configured to perform some or all of the methods disclosed herein, for example according to software stored in the ROM 724 and/or the RAM 726.

Management module 702 includes one or more management CPUs 708 that communicate with storage subsystem 720 via bus subsystem 730. Other subsystems, such as a network interface subsystem (not shown in Figure 7), may be on bus subsystem 730. Storage subsystem 720 can include memory subsystem 722 and non-volatile storage subsystem 728. Storage subsystem 720 represents an example of non-transitory computer-readable storage media that can store program code and/or data, which when executed by one or more management CPUs 708, can cause one or more management CPUs 708 to perform operations in accordance with embodiments of the present disclosure. The connections between the management module 702 and the I/O modules 706a and 706p are control plane connections.

Memory subsystem 722 can include a number of memories including main RAM 726 for storage of instructions and data during program execution and ROM (read-only memory) 724 in which fixed instructions and data are stored. Storage subsystem 728 can provide persistent (i.e., non-volatile) storage for program and data files, and can include various types of storage media known in the art such as solid-state drives, hard-disk drives, and so on.

One or more management CPUs 708 can run a network operating system stored in storage subsystem 720. A network operating system is a specialized operating system for network device 700 (e.g., a router, switch, firewall, and the like). For example, the network operating system may be Arista Extensible Operating System (EOS^{®}), which is a fully programmable and highly modular, Linux-based network operating system. Other network operating systems may be used.

Bus subsystem 730 can provide a mechanism for letting the various components and subsystems of management module 702 communicate with each other as intended. Although bus subsystem 730 is shown schematically as a single bus, alternative embodiments of the bus subsystem can utilize multiple buses.

Internal fabric module 704 and I/O modules 706a - 706p collectively represent the data plane of network device 700 (also referred to as data layer, forwarding plane, etc.). Accordingly, the connections between the internal fabric module 704 and the I/O modules 706a and 706p are data plane connections. Internal fabric module 704 represents interconnections among the various other modules of network device 700. Each I/O module 706a - 706p can include one or more input/output (ingress/egress) ports 710a - 710p that are used by network device 700 to receive and forward network traffic. Each I/O module 706a - 706p can also include packet processing capability, logically represented by respective packet processors 712a - 712p and memory components 714a - 714p. Packet processors 712a - 712p can comprise forwarding hardware, including for example, data processing elements such as an ASIC (application specific integrated circuit), FPGA (field programmable array), digital processing unit, and the like. Memory components 714a - 714p can include lookup hardware, including for example, content addressable memory such as TCAMs (ternary CAMs) and auxiliary memory such as SRAMs (static random access memory). The forwarding hardware in conjunction with the lookup hardware can provide wire speed decisions on how to process ingress packets and outgoing packets for egress. In accordance with some embodiments, some aspects of the present disclosure may be performed within the data plane.

Various modifications to the implementations described in this disclosure may be readily apparent to those having ordinary skill in the art. The disclosed examples may be applied to other implementations without departing from the scope of this disclosure. Accordingly, this disclosure is not intended to be limited to the implementations shown and described herein, but is to be accorded the widest scope consistent with the claims, the principles and the novel features disclosed herein. One of ordinary skill in the art will appreciate that the above description and the accompanying drawings have been presented only by way of example and that modifications in detail may be made within the scope of this disclosure.

In accordance with an embodiment, a method is provided that includes writing a test pattern of bits to one or more fields of at least one test packet, injecting the at least one test packet into a packet processing system of a network device, causing the at least one test packet to loop multiple times through ingress and egress portions of the packet processing system, trapping the at least one test packet, and determining whether the test pattern of the at least one test packet has been altered.

In accordance with another embodiment, causing the at least one test packet to loop multiple times involves causing the packet processing system to send the at least one test packet to an internal loopback port.

In accordance with another embodiment, causing the at least one test packet to be sent to the internal loopback port involves requesting a previously-unused virtual local area network (VLAN) identification number (ID) and associating the previously-unused VLAN ID with the internal loopback port.

In accordance with another embodiment, the method includes configuring the internal loopback port as a VLAN trunk port.

In accordance with another embodiment, the method includes configuring the internal loopback port as an untagged VLAN member of the previously-unused VLAN ID.

In accordance with another embodiment, the internal loopback port is configured to send the at least one test packet to an ingress packet processing module, includes causing the ingress packet processing module to re-write a source port field of the at least one test packet to indicate a central processing unit of the network device.

In accordance with another embodiment, causing the at least one test packet to be sent to the internal loopback port involves adding metadata to the at least one test packet that causes the at least one test packet to egress the internal loopback port.

In accordance with another embodiment, causing the at least one test packet to be sent to the internal loopback port involves re-writing a source port field of the at least one test packet.

In accordance with another embodiment, the method includes controlling a number of test packets simultaneously looping through the ingress and egress portions of the packet processing system.

In accordance with another embodiment, the method includes receiving user input, controlling the number of test packets simultaneously looping through the ingress and egress portions of the packet processing system is responsive to the user input.

In accordance with another embodiment, the user input includes input regarding a target bandwidth or a target packet traffic flow rate for a network device implementing the method.

In accordance with another embodiment, the method includes monitoring one or more criteria corresponding to a packet traffic flow rate of a network device implementing the method, controlling the number of test packets simultaneously looping through the ingress and egress portions of the packet processing system is responsive to the one or more criteria.

In accordance with an embodiment, a network device is provided that includes an interface system configured for receiving and transmitting packets, and a control system configured to implement a packet processing system, the control system being further configured to: (a) write a test pattern of bits to one or more fields of at least one test packet; (b) inject the at least one test packet into the packet processing system; (c) cause the at least one test packet to loop multiple times through ingress and egress portions of the packet processing system; (d) trap the at least one test packet; and (e) determine whether the test pattern of the at least one test packet has been altered.

In accordance with another embodiment, causing the at least one test packet to loop multiple times involves causing the packet processing system to send the at least one test packet to an internal loopback port.

In accordance with another embodiment, causing the at least one test packet to be sent to the internal loopback port involves requesting a previously-unused virtual local area network (VLAN) identification number (ID) and associating the previously-unused VLAN ID with the internal loopback port.

In accordance with another embodiment, the control system is configured to re-write a source port field of the at least one test packet.

In accordance with another embodiment, causing the at least one test packet to be sent to the internal loopback port involves adding metadata to the at least one test packet that causes the at least one test packet to egress the internal loopback port.

In accordance with an embodiment, one or more non-transitory media having computer-readable instructions for controlling a network device to perform a method encoded thereon, the method is provided that includes writing a test pattern of bits to one or more fields of at least one test packet, injecting the at least one test packet into a packet processing system of a network device, causing the at least one test packet to loop multiple times through ingress and egress portions of the packet processing system, trapping the at least one test packet, and determining whether the test pattern of the at least one test packet has been altered.

In accordance with another embodiment, causing the at least one test packet to loop multiple times involves causing the packet processing system to send the at least one test packet to an internal loopback port.

In accordance with another embodiment, causing the at least one test packet to be sent to the internal loopback port involves re-writing a source port field of the at least one test packet.

## Claims

1. A method, comprising:
writing a test pattern of bits to one or more fields of at least one test packet;
injecting the at least one test packet into a packet processing system of a network device;
causing the at least one test packet to loop multiple times through ingress and egress portions of the packet processing system;
trapping the at least one test packet; and
determining whether the test pattern of the at least one test packet has been altered.

2. The method of claim 1, wherein causing the at least one test packet to loop multiple times involves causing the packet processing system to send the at least one test packet to an internal loopback port.

3. The method of claim 2, wherein causing the at least one test packet to be sent to the internal loopback port involves requesting a previously-unused virtual local area network (VLAN) identification number (ID) and associating the previously-unused VLAN ID with the internal loopback port.

4. The method of claim 3, further comprising configuring the internal loopback port as a VLAN trunk port.

5. The method of claim 3, further comprising configuring the internal loopback port as an untagged VLAN member of the previously-unused VLAN ID.

6. The method of claim 2, wherein the internal loopback port is configured to send the at least one test packet to an ingress packet processing module, further comprising causing the ingress packet processing module to re-write a source port field of the at least one test packet to indicate a central processing unit of the network device.

7. The method of claim 2, wherein causing the at least one test packet to be sent to the internal loopback port involves adding metadata to the at least one test packet that causes the at least one test packet to egress the internal loopback port.

8. The method of claim 2, wherein causing the at least one test packet to be sent to the internal loopback port involves re-writing a source port field of the at least one test packet.

9. The method of claim 1, further comprising controlling a number of test packets simultaneously looping through the ingress and egress portions of the packet processing system.

10. The method of claim 9, further comprising receiving user input, wherein controlling the number of test packets simultaneously looping through the ingress and egress portions of the packet processing system is responsive to the user input.

11. A network device, comprising:
an interface system configured for receiving and transmitting packets; and
a control system configured to implement a packet processing system, the control system being further configured to:
(a) write a test pattern of bits to one or more fields of at least one test packet;
(b) inject the at least one test packet into the packet processing system;
(c) cause the at least one test packet to loop multiple times through ingress and egress portions of the packet processing system;
(d) trap the at least one test packet; and
(e) determine whether the test pattern of the at least one test packet has been altered.

12. The network device of claim 11, wherein causing the at least one test packet to loop multiple times involves causing the packet processing system to send the at least one test packet to an internal loopback port.

13. The network device of claim 12, wherein causing the at least one test packet to be sent to the internal loopback port involves requesting a previously-unused virtual local area network (VLAN) identification number (ID) and associating the previously-unused VLAN ID with the internal loopback port.

14. The network device of claim 12, wherein the control system is configured to re-write a source port field of the at least one test packet.

15. The network device of claim 12, wherein causing the at least one test packet to be sent to the internal loopback port involves adding metadata to the at least one test packet that causes the at least one test packet to egress the internal loopback port.
